# FASCICULE DE BREVET EUROPEEN

(11) **EP 1 020 472 B1**
(45) Date de publication et mention de la délivrance du brevet: **28.08.2002**
(21) Numéro de dépôt: 00420003.6
(22) Date de dépôt: 10.01.2000
(51) Int. Cl.: C07F 7/16, C01B 33/02

(54) **Procédé de fabrication de poudre de silicium active pour la préparation des alkyl- ou aryl-halogénosilanes**
Verfahren zur Herstellung eines aktiven Siliziumpulvers für die Herstellung von Alkyl- oder Aryl-Halogensilanen
Method for producing active silicon powder used for the preparation of alkyl- or aryl-halogenosilanes

(30) Priorité: 13.01.1999 FR 9900420
(43) Date de publication de la demande: 19.07.2000
(73) Titulaire: PECHINEY ELECTROMETALLURGIE, 92400 Courbevoie (FR)
(72) Inventeur: Margaria, Thomas, 74190 Le Fayet (FR); Meoni, Florence, 74700 Salanches (FR)
(74) Mandataire: Mougeot, Jean-Claude

(56) Documents cités:
- EP-A- 0 416 406
- EP-A- 0 494 837
- EP-A- 0 893 408
- US-A- 4 602 101
- US-A- 5 596 119
- US-A- 5 847 181
- KOMITSKY FRANK ET AL.: "Silicon for the chemical industry IV, June 3-5, 1998" 1998 , NORWEGIAN UNIVERSITY OF SCIENCE AND TECHNOLOGY , TRONDHEIM, NORWAY XP002114053 * page 217 - page 225 *

## Description

### Domaine de l'invention

L'invention concerne un procédé de fabrication de poudre de silicium, de granulométrie inférieure à 350 µm, présentant des propriétés catalytiques pour la fabrication des alkyl- ou aryl-halogénosilanes, destinés à la synthèse des silicones.

### Etat de la technique

La synthèse des alkyl- ou aryl-halogénosilanes par réaction entre 250 et 350°C d'un hydrocarbure halogéné, par exemple le chlorure de méthyl, sur le silicium, en présence de cuivre, est connue depuis le brevet US 2380995 délivré en 1945 à E.G. ROCHOW.

Cette réaction a atteint un développement industriel important, puisqu'elle est à la base de l'industrie des silicones. Elle se pratique le plus souvent avec CH₃Cl, et conduit à un mélange de différents méthylchlorosilanes en proportions variables.

Le rôle du cuivre dans la réaction a été décrit par exemple dans l'article de P. TRAMBOUZE "Contribution à l'étude du mécanisme de la synthèse des méthylchlorosilanes" Bulletin de la Société Chimique de France, n° 288, 1956, pp. 1756-1765, et dans celui de G.H. KOLSTER "The η' and ε' phase of the system copper-silicon as solid reactants in the synthesis of dimethyl-dichlorosilane" Recueil des Travaux de Chimie, vol. 83, 1964, pp. 737-751. Ces travaux montrent le rôle catalytique de la phase Cu₃Si dans la réaction de chlorométhylation.

Le brevet FR 2720385 de la demanderesse montre toutefois que, lorsqu'on introduit des quantités croissantes de cuivre dans le silicium, d'autres phases telles que Cu₄SiAl, Cu₂Si₃Al ou Cu₂Si₃Ca, apparaissent avant Cu₃Si, ce qui oblige à ajouter du cuivre en quantité sensiblement supérieure à celle engagée dans la phase active Cu₃Si.

Ainsi, seule une fraction du cuivre ajouté est valorisée.

Le brevet européen n° 0604092 de Dow Corning décrit la préparation d'alliage silicium-cuivre contenant de 0,01 à 9% de cuivre, pour la préparation des halogénosilanes et préconise qu'une partie du cuivre seulement soit apportée par l'alliage, le reste étant apporté de la manière habituelle par un composé de cuivre mélangé à la masse de contact.

Le brevet européen n° 0028009 d'Union Carbide propose de placer le cuivre à la surface des particules de silicium par mélange de poudres des deux composants et chauffage vers 1000°C sous atmosphère d'hydrogène.

En plus du cuivre, d'autres éléments ont été reconnus comme ayant une action favorable sur la vitesse ou la sélectivité de la réaction de ROCHOW. Ainsi, le brevet US 2666776 de Wacker Chemie préconise l'addition au silicium et au cuivre de la masse de contact d'un métal des 5ème ou Sème groupes de la classification périodique, en particulier le fer, le nickel, le cobalt ou le phosphore.

Le brevet DE 1165026 de Th. Goldschmidt décrit l'utilisation de silicium dopé au phosphore, à l'arsenic, à l'antimoine, au bismuth, à l'indium, au thallium et/ou au gallium.

Le brevet US 4602101 de Dow Corning propose d'ajouter à la masse de contact de 25 à 2500 ppm de phosphore, sous forme de phosphore élémentaire ou de composés tels que des phosphures. Les brevets EP 0272860 et 0273635 de la même société préconisent l'addition de phosphore, soit par l'intermédiaire des matières premières utilisées dans la fabrication du silicium par carbothermie au four électrique à arc, soit par addition dans la poche de raffinage. Parmi les différents composés du phosphore mentionnés dans ces 3 brevets figure le phosphure de cuivre Cu₃P, contenant environ 14% en poids de phosphore.

Le brevet européen n° 0494837 de la demanderesse décrit une poudre de silicium métallurgique à faible oxydation superficielle, présentant une couche superficielle de silice inférieure à 2 nm et obtenue notamment par broyage sous atmosphère peu réactive en présence d'une huile. Ce silicium permet d'améliorer notablement la vitesse de la réaction de chlorométhylation.

Dans le domaine des techniques de broyage, la demande de brevet japonais n° 63-055111 de Mitsubishi Metal décrit le broyage du silicium dans un broyeur à boulets avec addition de 0,1 à 20% d'un composé du cuivre, par exemple un chlorure ou un oxyde cuivreux ou cuivrique, dans le but d'éviter le collage du silicium sur les parois du broyeur.

Le brevet européen n° 0893408 de la demanderesse concerne un procédé de préparation de poudre de silicium active destinée à la réaction de Rochow, consistant à broyer du silicium métallurgique à une granulométrie < 350 µm, en présence d'au moins un catalyseur et/ou promoteur de la réaction de Rochow de manière à déposer ce ou ces élément(s) à la surface des grains. Elle concerne également une poudre de silicium active, de granulométrie < 350 µm, comportant à la surface des grains de 0,01 à 0,1g/m² de cuivre, et/ou de 0,003 à 0,03 g/m² d'étain et/ou de 0,003 à 0,03 g/m² de phosphore.

### Objet de l'invention

L'invention a pour but de préparer un silicium métallurgique incorporant du cuivre et du phosphore sous une forme qui le rende plus réactif que les produits de l'art antérieur et qui permette ainsi d'améliorer à la fois le rendement de la réaction, sa sélectivité, c'est-à-dire le taux de dichloro-diméthyl-silane dans les produits de la réaction, ainsi que la vitesse de démarrage de la réaction.

L'invention a pour objet un procédé de préparation de poudre de silicium destinée à la réaction de ROCHOW consistant à broyer du silicium métallurgique, contenant plus de 98% (en poids) de silicium, du fer jusqu'à 0,4%, de l'aluminium jusqu'à 0,2% et du calcium jusqu'à 0,2%, à une granulométrie inférieure à 350 µm, en présence de 0,1 à 1% en poids de phosphure de cuivre Cu₃P, de manière à déposer ce produit à la surface des grains de silicium.

Elle a également pour objet une poudre de silicium active pour la préparation des alkyl- ou aryl-halogénosilanes contenant plus de 98% (en poids) de silicium, du fer jusqu'à 0,4%, de l'aluminium jusqu'à 0,2% et du calcium jusqu'à 0,2%, de granulométrie inférieure à 350 µm, comportant du phosphure de cuivre à la surface des grains en quantité comprise entre 0,01 et 0,1 g/m² de surface des grains, et éventuellement un ou plusieurs autres éléments catalyseurs et/ou promoteurs de la réaction de synthèse.

La poudre de silicium selon l'invention est, de préférence, une poudre à faible oxydation superficielle avec une couche de silice inférieure à 2 nm, selon le brevet européen n° 0494837 mentionné ci-dessus.

### Description de l'invention

L'invention repose sur la constatation, par les inventeurs, d'une action catalytique améliorée par rapport au produit décrit dans le brevet européen n° 0893408 lorsqu'on choisit comme couche de dépôt à la surface des grains le phosphure de cuivre.

Le silicium métallurgique est préparé au four de réduction à arc et il est coulé, à partir de l'état liquide à une température comprise entre 1600 et 1800°C, soit en lingotière, les lingots obtenus étant ensuite concassés en morceaux de moins de 120 mm et rebroyés jusqu'à 20 mm, soit dans une cuve de granulation remplie d'eau. Dans ce cas, le matériau solide obtenu est un granulé de taille homogène de l'ordre de 10 mm.

Dans les deux cas, le matériau doit être broyé pour préparer une poudre de granulométrie inférieure à 350 µm. Le broyage est effectué dans un broyeur à barres ou à boulets permettant le maintien d'une atmosphère contrôlée, de préférence une atmosphère enrichie en azote et contenant moins de 8% d'oxygène. Les boulets ou les barres du broyeur peuvent être avantageusement en alliage cuivreux, ce qui permet, par leur usure, d'apporter un complément de cuivre à la surface des grains de silicium.

Le temps de séjour dans le broyeur est au maximum de 5 mn.

Le broyage s'effectue avec ajout de 0,1 à 1% en poids de phosphure de cuivre Cu₃P. Contrairement à d'autres composés du phosphore qui sont dangereux ou toxiques, ce produit est inerte et peut donc être utilisé en milieu industriel. On peut ajouter également une substance organique de nature à protéger la poudre de silicium de l'oxydation lors de la remise à l'air. A cette fin, on peut utiliser soit une huile de silicone, soit une huile minérale de type hydrocarbure, soit un ester, en proportion pondérale d'au plus 1%.

Cette quantité doit être comprise entre 0,01 et 0,1 g par m² de surface des grains. On peut fixer également de l'étain en quantité comprise entre 0,003 et 0,03 g/m², soit par broyage avec addition d'un composé d'étain (oxyde ou chlorure) soit en utilisant des barres ou boulets en alliage contenant de l'étain, par exemple du bronze, qui permet de déposer simultanément le cuivre et l'étain, voire du bronze phosphoreux qui apporte un complément de phosphore.

Les quantités fixées sont contrôlées par exemple par spectroscopie d'électrons Auger, qui permet d'analyser une couche superficielle de quelques nanomètres. L'échantillon sur lequel on veut déterminer la composition superficielle est soumis à des analyses successives par spectroscopie Auger au cours d'un décapage ionique qui élimine progressivement la couche superficielle du produit. On obtient ainsi, en connaissant la vitesse d'érosion, un profil de concentration en oxygène, cuivre, étain, phosphore ou autre élément. La vitesse d'érosion est déterminée par la mesure de la profondeur du cratère final ("talystep") ou à la suite d'un étalonnage par mesure d'un profil de concentration parfaitement connu d'isotope O₁₅ obtenu par implantation.

En ajoutant au broyage une substance organique telle qu'une huile de silicone, un hydrocarbure ou un ester, en quantité maximale de 1% en poids, et en maintenant dans le broyeur une atmosphère appauvrie en oxygène, on obtient des grains de silicium présentant une couche superficielle de silice d'épaisseur inférieure à 2 nm, conformément à l'enseignement du brevet EP 0494837 mentionné ci-dessus.

Une telle poudre de silicium présente, lors de la réaction de ROCHOW, une réactivité supérieure d'au moins 20% par rapport au silicium de l'art antérieur, une sélectivité améliorée d'au moins 5%, un temps d'incubation de la réaction beaucoup plus court, ce qui permet une augmentation de la productivité, notamment lorsqu'on utilise un procédé discontinu (batch), et une température d'apparition des produits de la réaction plus basse (250°C au lieu de 270 à 350°C).

### Exemples

### Exemple 1

On prépare par fusion en four à induction un alliage Si-Cu à 13% en poids de cuivre.

L'alliage est coulé, solidifié, broyé et tamisé. La fraction 50 - 160 µm est prélevée pour les essais ultérieurs. Dans du silicium métallurgique liquide prélevé sur la production d'une poche de coulée industrielle, on effectue une addition de cuivre, pour obtenir un alliage de composition suivante (en poids):
Cu = 3,31% Al = 0,193% Ca = 0,115% Fe = 0,36%

L'alliage est broyé de manière conventionnelle en poudre de granulométrie comprise entre 50 et 350 µm et on mesure une épaisseur de la couche superficielle de silice de l'ordre de 4 nm.

On mélange 40 g de cette poudre avec 2,5 g d'alliage Si-Cu et on effectue sur le mélange obtenu un test de chlorométhylation. Ce test consiste à placer la poudre de mélange, additionnée de 0,05 g de ZnO, dans un réacteur en verre de diamétre 30 mm muni d'un agitateur. On envoie un courant de CH₃Cl gazeux au travers d'un disque en verre fritté supportant la poudre. Le débit de gaz est maintenu constant à 3,6 10⁻³ m³/h. Après chauffage du milieu réactionnel et démarrage de la réaction, le système est maintenu à 300°C. Après 12 h de réaction, on note le débit moyen Q obtenu en diméthyldichlorosilane, ainsi que le taux α₂ de ce produit dans l'ensemble des produits de la réaction. La moyenne de 4 essais donne les valeurs suivantes:
Q = 8,0 g/h α₂ = 88%

On note également que le temps d'incubation nécessaire au démarrage de la réaction a été de 3 h 5 mn.

### Exemple 2

Partant de silicium métallurgique déjà concassé et broyé en morceaux de taille comprise entre 5 et 20 mm, on a effectué un broyage sous atmosphère contrôlée à moins de 5% d'oxygène, dans un broyeur à barres équipé pour la circonstance de barres en bronze à 18% d'étain. On a ajouté dans le broyeur de l'huile de silicone en quantité correspondant à 0,3% de la masse de silicium broyé.

La poudre obtenue a été tamisée pour garder la fraction comprise entre 50 et 350 µm.

On a mesuré sur les grains une épaisseur de la couche de silice de 1,2 nm et, par spectroscopie Auger, une teneur superficielle en cuivre de 0,07 g/m² et une teneur superficielle en étain de 0,02 g/m².

Le même test de chlorométhylation que celui de l'exemple 1 a donné sur cette poudre les résultats suivants (moyenne de 4 essais):
Q = 8,9 g/h α₂ = 92% Temps d'incubation = 1 h 24 mn.

### Exemple 3

On opère comme dans l'exemple 2 en ajoutant en plus au broyage une quantité de phosphure de cuivre à 14% en poids de phosphore correspondant à 0,45% de la masse de silicium. On mesure par spectroscopie Auger une teneur superficielle en phosphore de 0,03 g/m².

Les résultats du test de chlorométhylation donnent:
Q = 9,5 g/h α₂ = 94% Temps d'incubation = 0 h 28 mn.

## Revendications

1. Procédé de préparation de poudre de silicium active destinée à la réaction de ROCHOW consistant à broyer du silicium métallurgique contenant plus de 98% (en poids) de silicium, du fer jusqu'à 0,4%, de l'aluminium jusqu'à 0,2% et du calcium jusqu'à 0,2%, à une granulométrie inférieure à 350 µm, en présence de 0,1 à 1% en poids de phosphure de cuivre Cu₃P, de manière à déposer ce phosphure à la surface des grains.

2. Procédé selon la revendication 1, **caractérisé en ce que** le phosphure du cuivre est déposé à la surface des grains en quantité comprise entre 0,01 et 0,1 g/m² de surface des grains.

3. Procédé selon l'une des revendications 1 à 2, **caractérisé en ce que** le broyage est effectué dans un broyeur à barres ou à boulets, et que les barres ou les boulets sont en alliage cuivreux.

4. Procédé selon la revendication 3, **caractérisé en ce que** le broyage est effectué dans un broyeur à barres ou à boulets, et que les barres ou les boulets sont en bronze phosphoreux.

5. Poudre de silicium active pour la préparation des alkyl- ou aryl-halogénosilanes contenant plus de 98% (en poids) de silicium, du fer jusqu'à 0,4%, de l'aluminium jusqu'à 0,2% et du calcium jusqu'à 0,2%, de granulométrie inférieure à 350 µm, comportant du phosphure de cuivre à la surface des grains en quantité comprise entre 0,01 et 0,1 g/m² de surface des grains.

6. Poudre de silicium selon la revendication 5, **caractérisée en ce qu'**elle comporte à la surface des grains un ou plusieurs autres éléments catalyseurs et/ou promoteurs de la réaction de synthèse.

7. Poudre de silicium selon l'une quelconque des revendications 5 et 6, **caractérisée en ce que** la surface des grains comporte une couche de silice d'épaisseur inférieure à 2 nm.

## Claims

1. Method for preparing active silicon powder intended for a ROCHOW reaction, consisting of crushing metallurgic silicon containing more than 98 % (by weight) silicon, up to 0.4 % iron, up to 0.2 % aluminium, and up to 0.2 % calcium, having a grain size of less than 350 µm, in the presence of 0.1 to 1 % by weight of copper phosphide Cu₃P, such as to deposit this phosphide on the surface of the grains.

2. Method according to claim 1, **characterised in that** the copper phosphide is deposited on the surface of the grains in a quantity of between 0.01 to 0.1 g/m² grain surface.

3. Method according to any of claims 1 to 2, **characterised in that** the crushing is conducted in a bar or ball crusher, and **in that** the bars or balls are in a cuprous alloy.

4. Method according to claim 3, **characterised in that** crushing is conducted in a bar or ball crusher, and **in that** the bars or balls are in phosphor bronze.

5. Active silicon powder for the preparation of alkyl- or aryl-halosilanes containing more than 98 % (by weight) silicon, up to 0.4 % iron, up to 0.2 % aluminium, and up to 0.2 % calcium, having a grain size of less than 350 µm, comprising copper phosphide on the surface of the grains in a quantity ranging from 0.01 to 0.1 g/m² grain surface.

6. Silicon powder according to claim 5, **characterised in that** it comprises on the surface of the grains one or more other catalyst and/or promoter elements for the synthesis reaction.

7. Silicon powder according to either of claims 5 or 6, **characterised in that** the surface of the grains comprises a silica layer having a thickness of less than 2 nm.

## Patentansprüche

1. Verfahren zur Herstellung aktiven Siliziumpulvers für die Rochow-Synthese, wobei metallurgisches Silizium, das mehr als 98 % (der Masse) Silizium, Eisen bis zu 0,4 %, Aluminium bis zu 0,2 % und Kalzium bis zu 0,2 % enthält, auf eine Korngröße kleiner 350 µm gemahlen wird, und zwar in Anwesenheit von 0,1 bis 1 Masse-% Kupferphosphid Cu₃P, um dieses Phosphid an der Kornoberfläche abzulagern.

2. Verfahren nach Anspruch 1, **dadurch gekennzeichnet, dass** das Kupferphosphid an der Kornoberfläche in einer Menge von 0,01 bis 0,1 g/m² Kornoberfläche abgelagert wird.

3. Verfahren nach einem der Ansprüche 1 bis 2, **dadurch gekennzeichnet, dass** das Mahlen in einer Stab- bzw. Kugelmühle erfolgt und die Stäbe bzw. Kugeln aus Kupferlegierung sind.

4. Verfahren nach Anspruch 3, **dadurch gekennzeichnet, dass** das Mahlen in einer Stab- bzw. Kugelmühle erfolgt und die Stäbe bzw. Kugeln aus Phosphorbronze sind.

5. Aktives Siliziumpulver für die Herstellung von Alkyl- oder Aryl-Halogensilanen, die mehr als 98 % (der Masse) Silizium, Eisen bis zu 0,4 %, Aluminium bis zu 0,2 % und Kalzium bis zu 0,2 % enthalten, mit einer Korngröße kleiner 350 µm, das an der Kornoberfläche Kupferphosphid in einer Menge von 0,01 bis 0,1 g/m² Kornoberfläche aufweist.

6. Siliziumpulver nach Anspruch 5, **dadurch gekennzeichnet, dass** es an der Kornoberfläche ein oder mehrere weitere Katalysator- und/oder Promotorelemente für die Synthesereaktion aufweist.

7. Siliziumpulver nach einem der Ansprüche 5 und 6, **dadurch gekennzeichnet, dass** die Kornoberfläche eine Kieselsäureschicht von weniger als 2 nm Dicke aufweist.
